# EUROPEAN PATENT APPLICATION

(11) **EP 4 454 983 A1**
(43) Date of publication of application: **30.10.2024**
(21) Application number: 24170436.0
(22) Date of filing: 16.04.2024
(51) Int. Cl.: B62K 23/02, B62M 9/122, B62M 9/132, B62M 25/08, B62J 1/08

(54) **METHOD FOR CONTROLLING A BICYCLE ELECTRONIC SYSTEM, USER INTERFACE FOR A BICYCLE ELECTRONIC SYSTEM, AND BICYCLE ELECTRONIC SYSTEM**

(30) Priority: 21.04.2023 IT 202300007911
(71) Applicant: CAMPAGNOLO S.R.L., 36100 Vicenza (IT)
(72) Inventor: TASONIERO, Bruno, 37030 RONCA' (VR) (IT)
(74) Representative: Studio Torta S.p.A.

(57) **Abstract**

A method for generating a plurality of different command signals for each of a plurality of electric devices of a bicycle electronic system, each operable in a plurality of operating actions. The method comprises:
i) receiving a user input electric signal, obtained from actuation of a single switch of a user interface comprising a plurality of switches, and
ii) generating a command signal for a single electric device based both on a comparison among an operating time and, at least, a first predetermined time threshold and a second predetermined time threshold, and on the actuated switch, wherein the operating time is associated with the duration of actuation of the switch.

## Description

### CROSS-REFERENCE TO RELATED APPLICATIONS

This patent application claims priority from Italian patent application no. 102023000007911 filed on April 21, 2023, the entire disclosure of which is incorporated herein by reference.

### TECHNICAL FIELD

The subject-matter disclosed herein relates in general to the field of bicycle electronic systems. In particular, a method for controlling a bicycle electronic system, a user interface for a bicycle electronic system, and a bicycle electronic system are disclosed.

A manual control device for a bicycle electronic gearshift, a user interface of bicycle electronic gearshift, as well as a bicycle electronic gearshift (or, in general, system) which comprises the manual control device or the user interface are also disclosed.

Term "manual" will sometimes be omitted for the sake of brevity.

### BACKGROUND

Bicycles are often equipped with an electronic system comprising one or more electric devices such as for example a front derailleur, a rear derailleur, a transmission internal to the hub of the rear wheel, a seat post, an illumination device, a cycle computer, etc.

In the present description and in the attached claims, under the expression "electric device", in general electro-mechanical, electro-hydraulic, electro-pneumatic, electro-electronic and electronic devices are meant to be encompassed.

In particular, a bicycle electronic system often comprises a gearshifting system, comprising a rear derailleur and possibly a front derailleur. For controlling the derailleurs, gearshifting signals are used which are issued by manual control devices making up a user interface and/or processed by a data processing system, also based on other quantities. For controlling other electric devices of the bicycle electronic system, respective command signals issued by the user interface are used.

In the present description and in the attached claims, term "signal" is broadly used to indicate any form of matter or energy capable of propagation carrying along information, possibly being subject to transformations along the propagation path, preserving at least some of the information that one wishes to propagate. In the specific case of gearshifting signal, for example, the initial signal issued by the control device is representative of the cyclist's intention to shift.

Hereinafter in the present description and in the attached claims, a cyclist will be referred to, it being understood that it may be in general a non-on-board user, or bicycle user, for example during maintenance of the bicycle.

A user interface for controlling an electronic gearshift typically comprises a pair of manual control devices, which may be fixed to the handlebars or to the frame, or in some cases worn by the cyclist.

A wearable gearshift manual control device is known for example from EP3575198A1 and corresponding US2019367131A1 and comprises a wearable control unit for generating and emitting at least one electrical command to at least one piece of equipment of a bicycle, comprising a power source and a sensor powered by the power source, wherein the device comprises a target of the sensor, physically distinct and separate from the control unit, and not electrically connected to the control unit, wherein the sensor is a sensor for detecting the target, having a detection range, and the control unit generates and emits a command of said at least one electrical command in response to a change of state of the sensor brought about by entry of the target into the detection range of the sensor, and/or in response to a change of state of the sensor brought about by exit of the target from the detection range of the sensor.

A manual control device of the first type typically comprises a support body attachable to the handlebars or to the frame, in a position readily accessible to the cyclist, which support body bears manual actuation members, usually actuatable with one or more fingers which, when actuated, actuate one or more switches making it/them switch state. The so-called "integrated" manual control devices comprise manual actuation members intended to control not only the gear ratio, rather also a brake equipping the bicycle, besides possibly one or more manual actuation members intended to control other pieces of bicycle equipment.

When the gearshift comprises both the rear derailleur and the front derailleur, for control thereof a pair of manual control devices is typically provided, configured to be actuated one by the right hand and the other one by the left hand of the cyclist.

In the present description and in the attached claims, adjectives such as "proximal", "distal", "upper", "lower", "right", "left", "front", "rear" refer to the mounting condition of the control device on the bicycle, with reference to an observer on board of the bicycle and looking into the travelling direction; "proximal" is used to indicate closer to the longitudinal median plane of the bicycle and thus facing towards the centre of the handlebars when in a neutral, not steered position; adjective "distal" is used to indicate farther from that plane and from the center of the handlebars, facing away from the center of the handlebars.

In conventional systems, each gearshift manual control device has two manual actuation members (for example a lever and a push-button, or two levers) intended to issue two different gearshifting signals. Typically, the right manual control device issues upshift and downshift signals for the rear derailleur, respectively, with its two manual actuation members, and the left manual control device issues, instead, upshift and downshift signals for the front derailleur.

When the gearshift comprises a single derailleur, typically the rear derailleur associated with the hub of the rear wheel, typically for its control a pair of manual control devices is provided, configured to be actuated one by the right hand and the other one by the left hand of the cyclist. Typically the left manual control device is used to issue an upshift command whereby the chain is displaced, usually in proximal-to-distal direction (typically rightwards in the case of transmission on the right side of the bicycle), toward a smaller sprocket, and the rear gear ratio (between the pedal cranks and the rear wheel) increases; the right manual control device is used to issue a downshift command whereby the chain is displaced, usually in distal-to-proximal direction (typically leftwards in the case of transmission on the right side of the bicycle), toward a larger sprocket, and the gear ratio between the pedal cranks and the rear wheel decreases.

Also known, for example from documents EP2765073A1 and EP2020371A1**,** are systems wherein a single manual actuation member, of the lever type, is associated with two electric switches and is used to issue two different shift signals, based on the angle of actuation of the levers: if the angle is small, the manual actuation member closes one switch only, while if the angle is large, the manual actuation member closes both switches.

EP2236405A2 and the corresponding US2010/0244401A1 disclose a bicycle shifting control apparatus, comprising: a gear selection signal receiving section that selectively receives a first gear selection signal and a first/second gear selection signal; a gearshift determination section that determines a first rider shift intention for first gear shifting when the first gear selection signal is received by the gear selection signal receiving section, which meets a first signal criteria, and determines a second rider shift intention for performing second gear shifting in addition to the first shifting when the first/second gear selection signal is received by the gear selection signal receiving section, which meets a second signal criteria that is different from the first signal criteria; and a gearshift output section that outputs a first gearshift signal upon the gearshift determination section determining the first rider shift intention or the second rider shift intention and that outputs a second gearshift signal upon the gearshift determination section determining that the second rider shift intention.

The document uses, in practice, two control devices, each having two manual actuation members; the right control device is used to issue gearshifting commands of the rear derailleur and the left control device is used to issue gearshifting commands of the front derailleur, or to first issue gearshifting commands of the front derailleur and, additionally and immediately thereafter, gearshifting commands of the rear derailleur in order to limit the change of the overall gear ratio. In order to obtain that, in the left control device, each control lever may be associated with two switches, or each control lever may be associated with a single switch, and whether the actuation of the control lever has a duration less than or at a time threshold is evaluated.

The prior art document thus proposes using a different actuation of the left control device to the only end of accomplishing the synchronous gear shifting of the rear derailleur and of the front derailleur. The Applicant observes that the user interface described in the document requires a total of four manual actuation members and respective switches, with associated cost, weight and complexity of the mechanics and of the electric connections.

US2019/0337590A1 discloses a method of shifting a bicycle with an electronic gear shifting system, wherein the electronic gear shifting system comprises a first shift unit including a first brake support, a first brake lever pivotally mounted to the first brake support and a first switch mechanism mounted to the first brake support; a second shift unit including a second brake support, a second brake lever pivotally mounted to the second brake support and a second switch mechanism mounted to the second brake support; a control unit in communication with and responsive to first and second signals from the first and second switch mechanisms, respectively; and a rear gear shift mechanism in communication with and responsive to command signals from the control unit, comprising: actuating the first switch mechanism to perform an upshift with the rear gear shift mechanism; and actuating the second switch mechanism to perform a downshift with the rear gear shift mechanism. The method may further comprise the act of actuating the first and second switch mechanisms concurrently to cause a front gear shift mechanism to perform a front gear shift operation.

The Applicant observes that the electronic system disclosed in the above-mentioned document requires a very high attention threshold by the cyclist, because in order to shift with the front derailleur he/she necessarily has to use both hands in a strictly coordinated manner, namely meeting specific timings in the actuation of the two switch mechanisms. Furthermore, in the case wherein the front derailleur (named therein "front gear shift mechanism") comprises three (or more) toothed wheels (chain rings), the control of the front derailleur requires auxiliary variables to be evaluated, for example speed, acceleration, position of the derailleurs, torque measured by a power meter, inclination of the road etc.; alternatively, based on which switch is closed first, it requires an even higher attention threshold by the cyclist.

### SUMMARY

The technical problem faced herein is to control in an efficient manner a bicycle electronic system.

An additional object is to provide a user interface for a bicycle electronic system which is simple and inexpensive from the manufacture point of view.

The subject-matter disclosed herein relates, in an aspect thereof, to a method for generating a plurality of different command signals for each of a plurality of electric devices of a bicycle electronic system, each operable in a plurality of operating actions. The method comprises:
i) receiving a user input electric signal, obtained from actuation of a single switch of a user interface comprising a plurality of switches, and
ii) generating a command signal for a single electric device based both on a comparison among an operating time and, at least, a first predetermined time threshold and a second predetermined time threshold, and on the actuated switch, wherein the operating time is associated with the duration of actuation of the switch.

In the present description and in the attached claims, under term "switch", a device through which an electric circuit is open and closed is meant. A switch may be of the contact-, capacitive-, magnetic-, magneto-thermal-, thermal-, pressure-, touch-, dome-type (*dome switch*)*.*

In the present description and in the attached claims, under "actuation of a switch", the change of state from a normal state of the switch is meant: in the case of a normally open switch, the actuation is the transition to the closed state; in the case of a normally closed switch, the actuation is the transition to the open state.

In this manner, each individual switch is associated with the issue of at least two command signals.

The comparison among the operating time and (at least) two time thresholds allows one to reliably discriminate among (at least) two different actuation modes of the switches by the cyclist.

Furthermore, through the comparison with (at least) two time thresholds it is also possible to discriminate among more than two actuation modes, and thus issue at least two different command signals, with greater reliability.

The method may further comprise starting to measure an elapsed time since the detection of the actuation of the switch.

Alternatively or additionally, in the above method:
- the plurality of electric devices may comprise (also exclusively) a first electric device and a second electric device, each actuatable in (also exclusively) two operating actions, and
- the plurality of switches may comprise (also exclusively) a first switch and a second switch.

In that case, generating the command signal may further comprise:
if the elapsed time until conclusion of the actuation of the switch is less than or equal to the first time threshold, generating a first command signal if the actuated switch is the first switch, or generating a second command signal if the actuated switch is the second switch, and
if the elapsed time is not less than the second time threshold, generating a third command signal if the actuated switch is the first switch, or generating a fourth command signal if the actuated switch is the second switch,
wherein the second time threshold is higher than the first time threshold.

In such a manner, the command corresponding to the comparatively short actuation, less than the first time threshold, may be issued at the deactuation of the switch, while the command corresponding to the comparatively long actuation may be issued after a time corresponding to the second time threshold, measured since actuation of the switch.

This provision allows a prompter response of the bicycle electronic system being controlled to be obtained.

The first command signal and the second command signal may be generated to control the first electric device, and the third command signal and the fourth command signal may be generated to control the second electric device.

Alternatively or additionally to the above-mentioned provisions, in the above method, it may be provided for no command signal to be generated if the elapsed time until conclusion of the actuation of the actuated switch is less than a third predetermined time threshold, the third threshold being less than the first time threshold.

In this manner, a minimum threshold is provided for actuation validation, allowing a too short actuation to be ignored, which is typically representative of an unintentional actuation of the switch, caused for example by a cyclist's hand trembling, by vibrations from ground, and similar events.

Alternatively or additionally to the above-mentioned provisions, in the above method it may be provided for no command signal to be generated if the elapsed time until conclusion of the actuation of the actuated switch is less than the second time threshold and higher than the first time threshold.

Through this provision, an invalidity time interval associated with the duration of the actuation of the switch by the cyclist is determined, allowing the two types of gearshifting commands or other command signals desired by the cyclist to be discriminated with greater certainty, without requiring a very high attention threshold by the cyclist. The user interface thus turns out to be particularly easy to be used.

Alternatively or additionally to the above-mentioned provisions, the above method may comprise configuring the first switch to be actuated by the user's right hand, and configuring the second switch to be actuated by the user's left hand.

Alternatively or additionally to the above-mentioned provisions, in the above method -and/or in a bicycle electronic system disclosed herein-the plurality of electric devices may comprise at least two among a front derailleur, a rear derailleur, a transmission internal to the hub of the rear wheel, a saddle setting adjuster, an illumination device, a cycle computer.

The subject-matter disclosed herein relates, in another aspect, to a user interface comprising a plurality of switches and configured to issue a plurality of different command signals to each of a plurality of different electric devices of a bicycle electronic system, each operable in a plurality of operating actions, wherein said issuing comprises generating a command signal for a single electric device based both on a comparison among an operating time, associated with the duration of actuation of a single switch, and, at least, a first predetermined time threshold and a second predetermined time threshold, and on the actuated switch.

The user interface may be configured to measure an elapsed time since the detection of the actuation of the switch.

Alternatively or additionally to the above-mentioned provisions, in the user interface the plurality of switches may comprise (also exclusively) a first switch and a second switch, and the user interface may be configured to issue a plurality of different command signals to at least (or exclusively to) a first electric device and a second electric device of the plurality of electric devices.

Alternatively or additionally to the above-mentioned provisions, the user interface may be configured to execute the above control method, for example through a data processing system.

Alternatively or additionally to the above-mentioned provisions, the user interface may comprise a plurality of manual control devices, each including only one of the plurality of switches.

In this manner, the user interface turns out to be particularly simple and user friendly.

The subject-matter disclosed herein relates, in another aspect, to a bicycle electronic system comprising the above described user interface and a plurality of different electric devices, each configured to receive a plurality of different command signals from the user interface.

In the control method and in the user interface described above, a multiple short actuation of a switch, if a time interval between a successive short actuation and the immediately preceding release of the actuation is less than a (fourth) threshold, may entail the issue of a multi-shift signal, wherein the chain is displaced onto a toothed wheel not immediately adjacent to that whereat it is, without waiting for the chain to be effectively engaged with the (or each) intervening toothed wheel.

In particular, it may entail a multiple upshift of the rear derailleur in case the switch is intended for actuation with the right hand, and the issue of a multiple downshift signal of the rear derailleur in case the switch is intended for actuation with the left hand, the number of shifts corresponding to the number of short actuations of the multiple actuation.

The user interface may comprise memory means which store, at least, a first and a second time threshold, the second time threshold being higher than the first time threshold, as well as at least one timer for monitoring the elapsing of time since actuation of a switch.

The user interface may comprise at least one comparator for continuatively comparing the elapsed time with the first and the second time threshold.

The memory means may further store a third time threshold, the third time threshold being less than the first time threshold, said at least one comparator further comparing said elapsed time upon release of the switch with the third time threshold.

In the control method and in the user interface described above, a multiple short actuation of a switch, if a time interval between a successive short actuation and the release of the immediately preceding actuation is less than a (fourth) threshold, may entail the issue of a multi-shift signal, wherein the chain is displaced onto a toothed wheel not immediately adjacent to that whereat it is, without waiting for the chain to be effectively engaged with the (or each) intervening toothed wheel.

In particular, it may entail a multiple upshift of the rear derailleur in case the switch is intended for actuation with the right hand, and the issue of a multiple downshift signal of the rear derailleur in case the switch is intended for actuation with the left hand, the number of shifts corresponding to the number of short actuations of the multiple actuation.

The subject-matter disclosed herein also relates to some additional aspects, set forth hereinbelow.

The subject-matter disclosed herein also relates to a user interface configured to issue (at least) two different command signals to each of (at least) two different pieces of equipment or electronic devices of a bicycle electronic system, the user interface comprising (at least) two switches, wherein:
an actuation of each switch with a first duration causes, independently of actuation or non-actuation of the other (of each other) switch, the issue of a single command signal for a first of the two different pieces of equipment, and
an actuation of said each switch with a second duration different from the first duration causes, independently of actuation or non-actuation of the other (of each other) switch, the issue of a single command signal for a second of the two different pieces of equipment (different from the first of the two different pieces of equipment).

The command signals issued upon actuation of said each switch are, in particular, different from the command signals issued upon actuation of said other switch.

The subject-matter disclosed herein also relates to a bicycle electronic system comprising such a user interface and said (at least) two different pieces of equipment.

The subject-matter disclosed herein also relates to a method for issuing (at least) two different command signals to each of (at least) two different pieces of equipment or electric devices of a bicycle electronic system, comprising monitoring the actuation of (at least) two switches of a user interface,
in case of an actuation of each switch with a first duration, independently of actuation or non-actuation of the other (of each other) switch, issuing a single command signal for a first of the two (of the at least two) different pieces of equipment, and
in case of an actuation of said each switch with a second duration different from the first duration, independently of actuation or non-actuation of the other (of each other) switch, issuing a single command signal for a second of the two (of the at least two) different pieces of equipment.

The subject-matter disclosed herein also relates to a user interface configured to issue (at least) two different command signals to a bicycle electronic system, the user interface comprising (at least) a switch, wherein:
an actuation of said switch with a duration less than a first time threshold causes the issue of a first command signal,
an actuation of said switch with a duration not less than a second time threshold, higher than the first time threshold, causes the issue of a second command signal, different from the first command signal,
an actuation of said switch with an intermediate duration between the first and the second time thresholds does not cause the issue of any second command signal.

The subject-matter disclosed herein also relates to a method for issuing (at least) two different command signals to a bicycle electronic system, comprising monitoring the actuation of (at least) a switch of a user interface, and
in case of an actuation of said switch with a duration less than a first time threshold, issuing a first command signal,
in case of an actuation of said switch with a duration not less than a second time threshold, higher than the first time threshold, issuing a second command signal, different (of a different type) from the first command signal,
in case of an actuation of said switch with an intermediate duration between the first and the second time threshold, not issuing any second command signal.

The subject-matter disclosed herein also relates to a bicycle electronic gearshift comprising a front derailleur, a rear derailleur and the user interface having one or more of the features described above.

The subject-matter disclosed herein also relates to a bicycle electronic gearshift comprising a front derailleur, a rear derailleur and two control devices, each configured to be handled with a respective cyclist's hand, each control device having, as far as issue of gearshifting commands is concerned, only one single manual actuation member actuating a respective single switch, wherein the actuation of each switch through the actuation of the respective manual actuation member in the same oriented direction in two different modes causes, independently of actuation or non-actuation of the other switch with the respective manual actuation member, the issue of two gearshifting commands of a different type, overall gearshifting commands of four different types being issued.

Under the expression "as far as issue of gearshifting commands is concerned" it is meant that each manual control device may comprise one or more further manual actuation members and/or further switches, however used for issuing commands different from gearshifting commands, which however may include setting commands of the gearshift and/or of a derailleur.

Under the expression "oriented direction", a trajectory, not necessarily straight, and an associated direction of travel are meant.

The subject-matter disclosed herein also relates to a method for electronically controlling a bicycle gearshift, comprising:
- providing a user interface comprising two control devices, each configured to be handled with a respective cyclist's hand, each control device having a manual actuation member actuating a respective single switch,
- discriminating between two actuation modes in the same oriented direction of the manual actuation member of each control device,
- issuing four different gearshifting signals, based on which manual actuation member is actuated and in which of the two modes.

In the gearshift and in the method discussed above, the four different shift signals may comprise: upshift of a rear derailleur of the gearshift, downshift of the rear derailleur, upshift of a front derailleur of the gearshift, downshift of the front derailleur.

Discriminating between two actuation modes may comprise discriminating between a comparatively short actuation and a comparatively long actuation of the manual actuation member.

The subject-matter disclosed herein also relates to a user interface of a bicycle electronic gearshift comprising a front derailleur and a rear derailleur, the user interface (70) comprising, as far as issue of gearshifting commands is concerned, only two manual actuation members, each actuating a single switch, characterized in that the actuation of each switch through the actuation of the respective manual actuation member in the same oriented direction in two different modes causes, independently of actuation or non-actuation of the other switch with the respective manual actuation member, the issue of two commands of a different type, overall gearshifting commands of four different types being issued.

The subject-matter disclosed herein also relates to a user interface of a bicycle electronic gearshift comprising a single derailleur, comprising, as far as issue of gearshifting commands in the two directions of the derailleur is concerned, only one single manual actuation member actuating a single switch, wherein the actuation of the manual actuation member in the same oriented direction in two different modes entails the issue of the gearshifting commands in the two directions.

The subject-matter disclosed herein also relates to a bicycle electronic gearshift comprising a single derailleur and the above user interface.

The subject-matter disclosed herein also relates to a bicycle electronic gearshift comprising a single derailleur and, as far as issue of gearshifting commands in the two directions of the derailleur is concerned, only one single manual actuation member actuating only a single switch, wherein the actuation of the manual actuation member in the same oriented direction in two different modes entails the issue of the gearshifting commands in the two directions.

The subject-matter disclosed herein also relates to a bicycle electronic gearshift comprising a front derailleur, a rear derailleur, a first control device which issues gearshifting commands only for the rear derailleur, and a second control device which issues gearshifting commands only for the front derailleur, wherein each control device has only one single manual actuation member actuating a respective single switch, the actuation of each switch through the actuation of the respective manual actuation member in the same oriented direction in two different modes entailing the issue of an upshift command and of a downshift command, respectively.

The two shifting signals may be selected between (i) upshift and downshift commands of one and a same derailleur (ii) gear ratio gearshifting commands in the two directions.

The provisions described with reference to the initially described aspects may apply to the various additional aspects of the subject-matter disclosed herein.

### BRIEF DESCRIPTION OF THE DRAWINGS

Further features and advantages of the subject-matter disclosed herein will become clearer from the following detailed description of preferred embodiments thereof, made with reference to the attached drawings, wherein:
- figure 1 schematically shows a bicycle with an example, not-limiting bicycle electronic system,
- figures 2a-2c schematically show some example, not-limiting embodiments of a control device of a user interface for the bicycle electronic system,
- figure 3 is a flowchart relating to a method for controlling the bicycle electronic system,
- figures 4-9 schematically show some example, not-limiting embodiments of the user interface and of the control method, and
- figure 10 is another flowchart relative to a method for controlling a bicycle electronic system.

### DESCRIPTION OF EMBODIMENTS

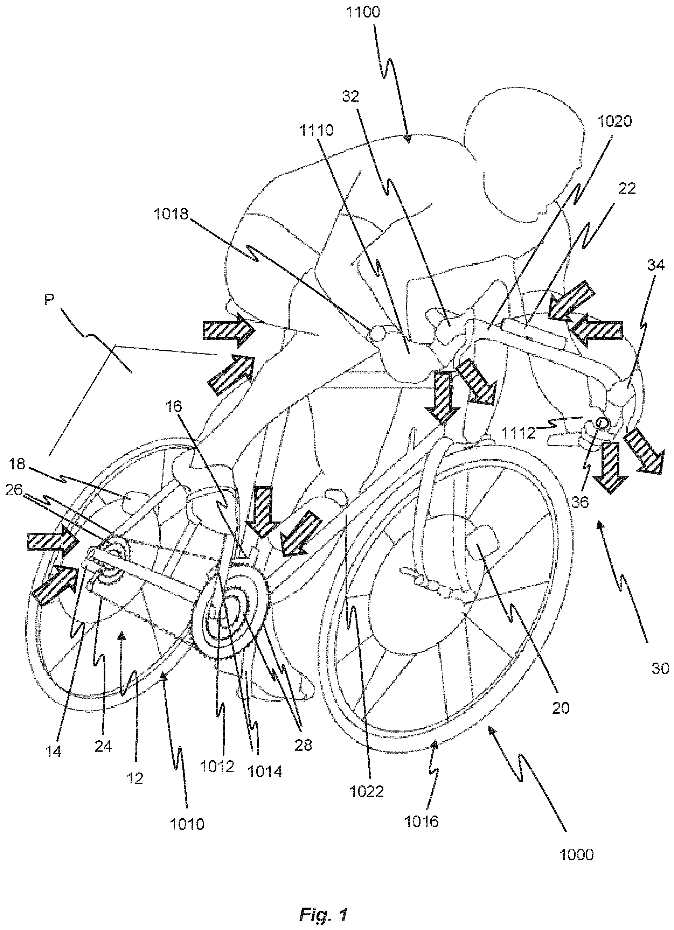

With reference to **figure 1****,** a bicycle electronic system according to the subject-matter disclosed herein comprises a plurality of electric devices or pieces of equipment of the bicycle 1000, different from each other.

A gearshifting system 12, typically comprising a rear derailleur 14 associated with the hub of the rear wheel 1010 and a front derailleur 16 (which however may be absent) associated with the bottom bracket spindle 1012, axle of the pedal cranks 1014, as well as a cycle computer 22 may be recognized.

The bicycle electronic system may comprise electronic devices not shown, such as for example a front suspension or shock absorber, a rear suspension or shock absorber, a saddle setting adjuster, one or more illumination devices, a satellite navigator, a training device, an anti-theft device, etc. Instead of a rear derailleur, a transmission internal to the hub of the rear wheel 1010 may be provided for.

The electronic system need not necessarily comprise all the above listed electric devices, and in general may comprise even just two electronic devices and, for certain aspects of the subject-matter disclosed herein, even just one electronic device.

The electronic system may also comprise one or more detector devices of the conditions of the route and/or of the cyclist 1100, such as for example a hearth rate monitor, an accelerometer, a cadence sensor, a pedaling sensor, devices internal to the cycle computer 22 such as for example a GPS, an altimeter, a clinometer, etc. and/or may communicate with other devices or pieces of equipment such as a smartwatch 1018, a smartphone, a tablet, a computer, a battery charger, smart watches, etc.

The electronic system may also be configured to issue visual, audible and/or tactile alerts to the cyclist 1100, for example through LEDs, buzzers, loudspeakers, one or more displays, for example on the cycle computer 22.

The bicycle may also provide for other devices besides those being part of the electronic system. For example, in figure 1, a brake 18 associated with the rear wheel 1010 and a brake 20 associated with the front wheel 1016 may be recognized.

Each of the electric devices of the bicycle electronic system is operable in a plurality of operating actions. For example, a derailleur 14, 16 is operable or actuatable to perform an upshift or to perform a downshift and possibly to perform a multi-shift or to make one or more settings; a saddle setting adjuster is operable or actuatable to raise or lower the saddle; etc.

Each of the electric devices of the bicycle electronic system is configured to receive a plurality of different command signals, as symbolized by the arrows entering the electric devices 14, 16, 22 and at a saddle setting adjuster, not visible. The arrows are not labelled for the sake of clarity. Each command signal controls a respective operating action of the electric device.

A user interface 30 allows the cyclist to control the bicycle electronic system.

A data processing system of the electronic system, implemented in various hardware, firmware and/or software modes, not necessarily by a single processor device (typically, a microprocessor or microcontroller), supervises the commands input by the cyclist 1100 through the user interface 30, possibly processing them also considering data detected by any detector device(s) and/or data received from the devices with which the electronic system communicates, and forwards them to the electric devices of the electronic system in order to control them, for example it forwards them to the derailleurs 14, 16 in order to perform the gearshifts. The data processing system may reside in the user interface (in one or more of its control devices), in one or in both derailleurs 14, 16, in a unity interposed between them (not shown), and in general it may also be distributed among some or all these components and/or other components.

It is desirable for the user interface 30 to be reliable and possibly simple, inexpensive and light.

The user interface 30 comprises one or more manual control devices such as for example the manual control devices 32, 34, 36 shown in figure 1 and better described hereinbelow. The user interface 30 issues command signals for the electronic system, as symbolized by the arrows exiting the manual control devices 32, 34, 36. The arrows are not labelled for the sake of clarity.

In the case of figure 1, for the sake of clarity, less issued command signals are shown than the number of command signals necessary for controlling all the electric devices shown, but it is understood that the user interface 30 is configured to issue all the necessary command signals, according to the effective configuration of the electronic system and thus the number of electric devices and the number of command signals that each electric device is configured to receive, namely the number of operating actions in which each electric device is operable.

The following description is made, merely by way of non-limiting example, with reference mainly to an electronic system only comprising the gearshift 12 comprising the rear derailleur 14 and the front derailleur 16, and to a user interface 30 configured to issue command signals for these two electric devices. It is however understood that what follows applies in general to the control of any electronic system, comprising two electric devices, plural electric devices and, as far as some aspects of the subject-matter disclosed herein is concerned, even a single electric device. Those skilled in the art will understand, on the basis of the present description, how to implement the subject-matter disclosed herein in the case of a different electronic system.

In greater detail, a motion transmission system in a bicycle 1000 typically comprises a chain 24 extended in a closed loop across toothed wheels 26, 28 respectively associated with the hub of the rear wheel 1010 and with the bottom bracket spindle 1012 (the axle of the pedal cranks 1014), respectively also called sprockets and chainrings. When at at least one of these positions there is a group of coaxial toothed wheels (called "sprocket assembly" at the hub of the rear wheel and "crankset" at the bottom bracket spindle or axle of the pedal cranks), the motion transmission system has a variable gear ratio and is provided with the gearshifting system 12 (briefly, gearshift 12); in that case, the rear derailleur 14 and/or the front derailleur 16 are provided in order to displace the transmission chain 24 bringing it into engagement with a preselected toothed wheel 26, 28, therewith changing the gear ratio.

In the present description and in the attached claims, the expression "gear ratio" is meant in general to encompass one or more of the following, unless otherwise specified:
- the front gear ratio between the axle 1012 of the pedal cranks 1014 and the chain 24,
- the rear gear ratio between the chain 24 and the hub of the rear wheel 1010,
- the overall gear ratio between the axle 1012 of the pedal cranks 1014 and the hub of the rear wheel 1010.

In some cases, the chain 24 is replaced with a toothed belt, but for the sake of brevity hereinafter and in the attached claims, term "chain" will be used to refer to both cases of motion transmission member between the toothed wheels.

In the case, of interest herein, of an electric/electronic gearshift, each derailleur 14, 16 comprises an electric motor or a geared motor which displaces a chain guide. In the present description and in the attached claims, term "geared motor" is broadly used to mean an electric motor which may, but not necessarily must, be coupled to a speed reducer, the speed reducer including at least one gear and preferably a gear train. In the present description and in the attached claims, under term "gear", a mechanism serving to transmit movements, through a pair of toothed members, is meant.

While when the gearshift is automatic, in order to establish the gear ratio and to control the derailleurs in order to obtain it, signals are used which are processed by the data processing system of the electronic system, on the basis of detected quantities relating to the state of the cyclist and/or of the bicycle (derailleurs included) and/or of the travel route, in the case, of interest herein, of a manual gearshift or of an automatic gearshift having a semiautomatic mode, it is -only or also- the cyclist 1100 who decides the gear ratio and controls the derailleurs 14, 16 in order to obtain it, through the user interface 30.

The user interface 30 comprises, in the case shown in figure 1, two manual control devices 32, 34 attached to the bicycle 1000, each configured to be handled with a respective cyclist's hand 1110, 1112, and one or a pair of manual control devices of the wearable type, only one of which is visible and indicated with reference numeral 36.

The manual control devices 32, 34 are typically provided for and configured to be attached in proximity of or at the grips of the handlebars 1020, so as to be accessible to the cyclist when he/she grips the latter in order to drive the bicycle, or are provided for and configured to be attached at locations of the frame 1022 of the bicycle 1000 accessible to the cyclist 1100 when he/she is in the driving condition of the bicycle 1100.

For example, the user interface 30 may comprise, alternatively or additionally, manual control devices of the so-called *bar-end* type, configured to be attached on resting bars facing forward in handlebars specialized for speed races.

For example, the wearable manual control devices or those of the *bar-end* type may issue command signals which are duplicates of those issued by the manual control devices 32, 34 attached to the handlebars 1020, but in general the various manual control devices that are present may issue respective command signals, all different to each other.

For ease of description, in the following reference will be mainly made just to the manual control devices 32, 34 attached to the handlebars 1020.

The manual control devices 32, 34 are provided with a suitable number of manual actuation members (not shown in figure 1). The manual actuation members of a manual control device may be for example of the lever type, namely operated with a rotary movement, or of the push-button type, namely operated with a linear movement. On a same manual control device, there are not necessarily manual actuation members all of a same type.

In the case of interest herein of electronic gearshift 30 and in general of electric devices, the manual actuation members switch the state of switches. One or more of the manual actuation members may however be absent, the cyclist 1100 directly actuating the switches.

However the user interface 30 may also comprise one or more manual actuation members which issue(s) commands in a mechanical manner.

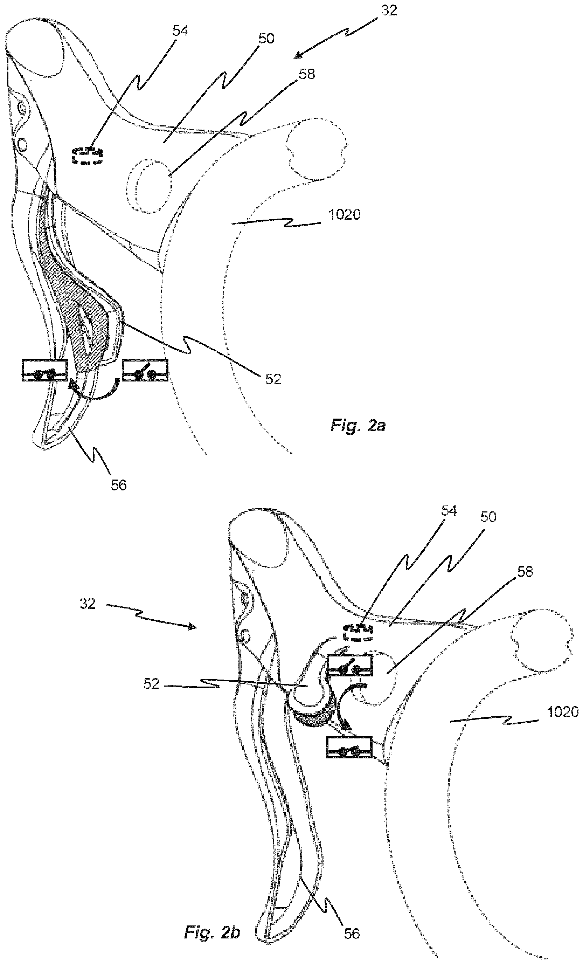

In **figures 2a-2c** some possible embodiments of a manual control device of the user interface 30 according to the subject-matter disclosed herein are shown in a completely schematic manner and merely by way of non-limiting example. The examples shown in figures 2a and 2b represent merely some of the possible configurations of the commands and only one of the types of handlebars 1020 (shown in dotted lines) on which they may be mounted. The examples shown should in no case be deemed as limiting the scope of the subject-matter disclosed herein.

In figures 2a-2c, corresponding elements are identified with the same reference numerals in order to favour the description.

The manual control device 32 shown in each figure is configured and intended for actuation with the right hand 1110 of the cyclist 1100; a manual control device 34 configured and intended for actuation with the left hand 1112 of the cyclist 1100, hereinbelow briefly named "left command", is generally the mirror image thereof. Thus, in the configuration shown there is a symmetry between the two manual control devices 32, 34 with respect to the longitudinal median plane P of the bicycle 1000 (cf. figure 1).

The manual control device 32 shown in each figure 2a, 2b comprises a support body 50 attachable to the bicycle 1100, in particular to the handlebars 1020.

The manual control device 32 (and 34) comprises, as far as issue of gearshifting commands is concerned, a single manual actuation member 52 actuating a single switch 54. The single switch 54 is shown in a completely schematic manner in the support body 50. The mechanics of the transmission of the actuation movement from the manual actuation member 52 to the switch 54 goes beyond the subject-matter disclosed herein and, accordingly, is not described in detail.

As already mentioned, under the expression "as far as issue of gearshifting commands is concerned" it is meant that each manual control device 32 (and 34) may comprise one or more further manual actuation members and/or further switches, however used to issue commands different from gearshifting commands, which may however include setting commands of the gearshift 12 and/or of a derailleur 14, 16.

The control device 32 of figures 2a, 2b, for example, comprises a brake lever 56 and a push-button 58 for selecting a mode for configuration, setting and/or customization of the gearshift 12 or in general of the electronic system of bicycle 1000. Control devices such as that shown in figures 2a, 2b, which also allow to control a brake 18, 20, are sometimes called "integrated control devices".

The manual actuation member 52 is displaced, by actuation by the cyclist, from a rest position (shown without any filling) to an actuated position (shown with a hatch filling), and is urged from the actuated position to the rest position by return means (not shown). The curved arrow schematically shows the actuation direction.

In the control device 32 for a curved handlebars (*drop-bar*) shown in figure 2a, for example, the single manual actuation member 52 intended to issue gearshifting commands is a lever and the actuation direction is generally from distal to proximal. The lever which implements the single manual actuation member 52 is configured to be actuated with one finger or plural fingers other than the thumb of the cyclist 1100. The lever which implements the single manual actuation member 52 may be pivoted to the brake lever 56 or to the support body 50. Because the brake lever 56 is articulated at its upper end, the pivot axis of the brake lever 56 being essentially horizontal and forward with respect to the handlebars 1020 in the travel direction, so that the brake lever 56 is operated by pulling it toward the curved end of the handlebars 1020, when the manual actuation member 52 intended to issue gearshifting commands is a lever pivoted to the support body 50, an articulated joint (not shown) is provided for, which allows the brake lever 56 to be followed during actuation of the latter.

In the control device 32 of figure 2b, also for a curved handlebars (*drop-bar*)*,* the single manual actuation member 52 intended to issue gearshifting commands is a small lever pivoted on the proximal face of the support body 50 and the direction of the actuation movement is generally from top to bottom. The lever is configured to be operated with the thumb.

Alternatively, the single manual actuation member 52 intended to issue gearshifting commands may be a push-button on the proximal face of the support body 50, similar to the mode selection push-button 58. In that case, the direction of the actuation movement is toward the support body 50 and the push-button is configured to be operated with the thumb.

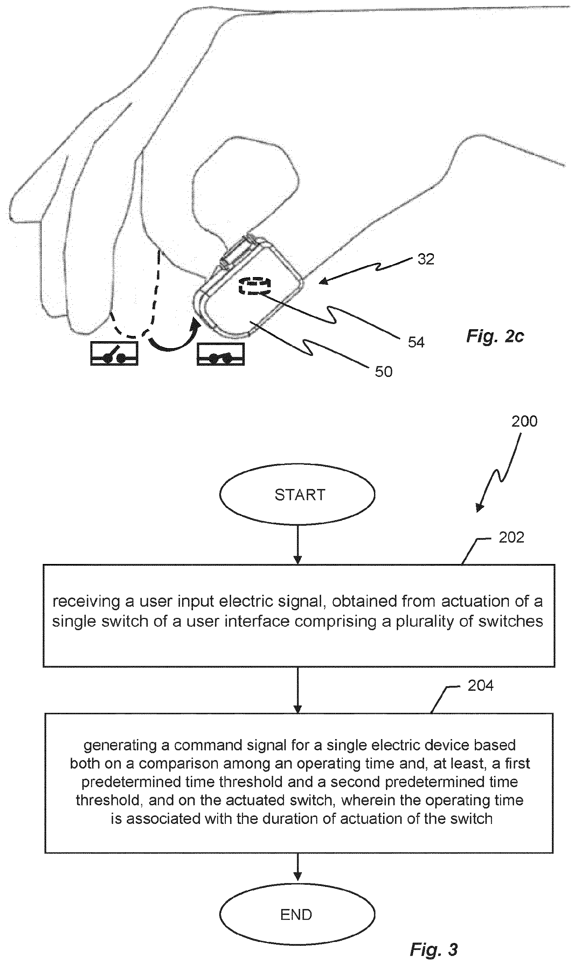

In the control device 36 of figure 2c, a switch 54 (or more than one) is housed in a support body 50 configured to be worn on a finger of the cyclist 1000, for example on the thumb. The switch 54 is actuated by moving another finger, for example the index finger, closer to the support body 50. On the other finger there may be an auxiliary member (not shown), for example a ferromagnetic element in the case of a magnetic switch.

In the various embodiments of the user interface 30, each switch 54 is a two-state switch, and in particular one having a stable state and an unstable state. The manipulation of the switch, by contact, by actuation, or by proximity, allows a change of state, opening or closing the switch itself.

The switch 54 may be, for example, a normally open switch. In this case, the manual actuation member 52 when actuated, or bringing closer another finger, closes the switch 56, the switch 52 being open when the manual actuation member 52 is in the rest position, not actuated, or when the other finger is far from the finger wearing the support body 50.

In figures 2a-2c there are schematically shown, merely by way of non-limiting example, the states of the switch 54 in the case of a normally open switch, at the rest position and at the position of actuation of the single manual actuation member 54 and of the fingers. This non-limiting example case will be referred to hereinbelow. Those skilled in the art will understand the changes to be made in the case of a normally closed switch.

In other embodiments, a manual control device of the user interface 30 may be configured to be attached to extensions of the handlebars (so-called *bar ends*) or to the frame.

Alternatively to what is shown, the user interface 30 may comprise only one of the two manual control devices 32, 34 attached to the handlebars 1020 (or in general to the bicycle) and/or only one of the wearable manual control devices 36, and two (or more) switches in said single manual control device, possibly associated with a respective manual actuation member or with a common manual actuation member, for example a tilting button. In the case of a wearable control device similar to that of figure 2c, each switch may, for example, be actuated with an auxiliary member provided on a respective different.

In still other cases, the user interface 30 may include more than one manual control device 32, 34, 36, one or more of which including two (or more) switches, to issue a desired number of command signals.

According to an aspect of the subject-matter disclosed herein, the user interface 30 comprises a plurality of switches, such as switches 54, and is configured to issue a plurality of different command signals to each of a plurality of different electric devices of the bicycle electronic system. The user interface 30 generates a command signal for a single electric device based both on a comparison among an operating time, associated with the duration of actuation of a single switch, and, at least, a first predetermined time threshold and a second time predetermined threshold, and on the actuated switch. In this manner, each single switch is associated with the issue of at least two command signals, as symbolized by the arrows exiting the manual control devices 32, 34, 36 in figure 1.

With reference to **figure 3****,** which represents an aspect of the subject-matter disclosed herein, a method 200 for generating a plurality of different command signals for each of a plurality of electric devices (such as for example the derailleurs 14, 16) of a bicycle electronic system, each operable in a plurality of operating actions, comprises the steps of:
i) receiving, block 202, a user (in particular, the cyclist) input electric signal, obtained from actuation of a single switch (for example one of the switches 54) of a user interface 30 comprising a plurality of switches,
ii) generating, block 204, a command signal for a single electric device (for example one of the derailleurs 14, 16) based both on a comparison among an operating time and, at least, a first predetermined time threshold and a predetermined second time threshold, and on the actuated switch, wherein the operating time is associated with the duration of actuation of the switch 54.

The comparison among the operating time and (at least) two time thresholds allows one to reliably discriminate between (at least) two different actuation modes by the cyclist.

Furthermore it is also possible to discriminate among more than two actuation modes, and therefore issue at least two different command signals, with greater reliability.

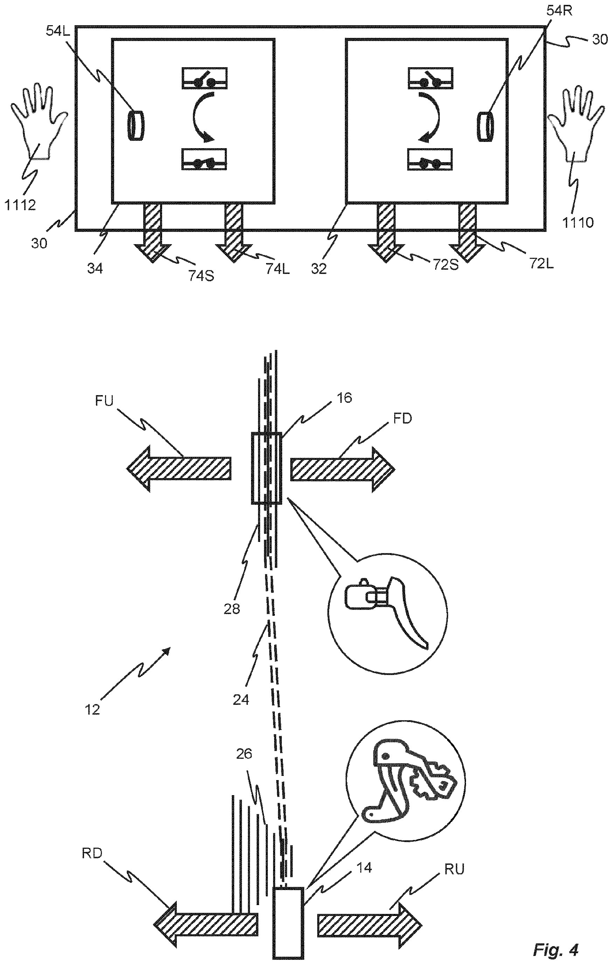

The above user interface 30 and the above control method 200, which have been described also in the introductory part of the present disclosure, are better illustrated hereinbelow, with reference to non-limiting, example embodiments thereof shown in figures 4-10. As already mentioned, reference is specifically made by way of non-limiting example to the case of an electronic system comprising the gearshift 12 with the derailleurs 14, 16 and the user interface 30 with the two manual control devices 32, 34. Furthermore, reference is made by way of non-limiting example to the case of manual control devices 32, 34 each comprising a single switch 54.

Thus, in **figure 4** and in the figures successively described, the operation of a bicycle gearshift 12 actuated through a user interface 30 disclosed herein is shown in a totally schematic manner.

The user interface 30 comprises the two control devices 32, 34, right and left, each configured to be manipulated with a respective hand of the cyclist 1100, the right hand 1110 and the left hand 1112.

Each control device 32, 34 has, as far as issue of gearshifting commands is concerned, a single respective switch 54 (54R, 54L).

The actuation of each switch 54 (54R, 54L) causes the issue of two different command signals, hereinafter briefly "commands", in particular of two gearshifting commands of a different type: it is schematically shown that the right control device 32 issues two commands 72S, 72L, and that the left control device 34 issues two commands 74S, 74L. The two commands 72S, 72L issued through the right control device 32 are also of a different type from the two commands 74S, 74L issued through the left control device 34.

Specifically, the actuation of a switch generates an electric signal input by the user or cyclist 1100, which is transmitted to the data processing system of the bicycle electronic system; the latter generates the proper command signal 72S, 72L, 74S, 74L. The initial electric signal issued at the actuation of the switch may be transmitted, for example, initially by cable within the control device 32, 34 of the user interface 30, then in wireless mode with a proper communication protocol, then possibly received by an intermediate component (for example a central processing unit, the cycle computer 22 or a smart-phone or other general purpose device provided with a proper app), then received by the derailleur 14, 16, and re-transformed into electric signal before arriving at the motor of the derailleur 14, 16.

It is noted that the two commands 72S, 72L (respectively 74S, 74L) are issued upon actuation, in two different modes, of each switch 54 (54R or respectively 54L) independently of actuation or non-actuation of the other switch 54 (54L or respectively 54R): in other words, the right control device 32 issues two commands 72S, 72L and the left control device 34 issues two further commands 74S, 74L, without any of the four commands 72S, 72L, 74S, 74L depending on the concurrent actuation of the two switches 54 (54R, 54L) of the two control devices 32, 34.

Overall, commands of four different types are issued, in particular commands of the following four different types: upshift RU of the rear derailleur 32, downshift RD of the rear derailleur 32, upshift FU of the front derailleur 34, downshift FD of the front derailleur 34, respectively shown by arrows representing the displacement with respect to the toothed wheels 26, 26 of the motion transmission system.

In the case of a switch 54 actuated through a manual actuation member of the lever type, such as the lever 52 of figure 2a or the small lever 52 of figure 2b, the two different actuation modes of the switch 54 may in particular be obtained through the actuation of the manual actuation member (lever or small lever 52) in the same oriented direction in two different modes, and in particular with two different time durations.

As already discussed in the introductory part of the present disclosure, the user interface 30, despite having a very small number of components, and in particular a minimum number of, for example only two, switches 54 (as well as of manual actuation members), and thus being particularly light, inexpensive and constructively simple, is capable of issuing all the four commands RU, RD, FU, FD necessary for actuation of the two derailleurs 14, 16 of the gearshift 12, in a reliable besides very convenient manner, which does not require a particularly high attention threshold nor coordination ability the cyclist C. In particular, not providing for any concurrent operation with both hands, it is also suitable for uncoordinated cyclists and travel situations wherein a single hand is used to drive the bicycle 1000.

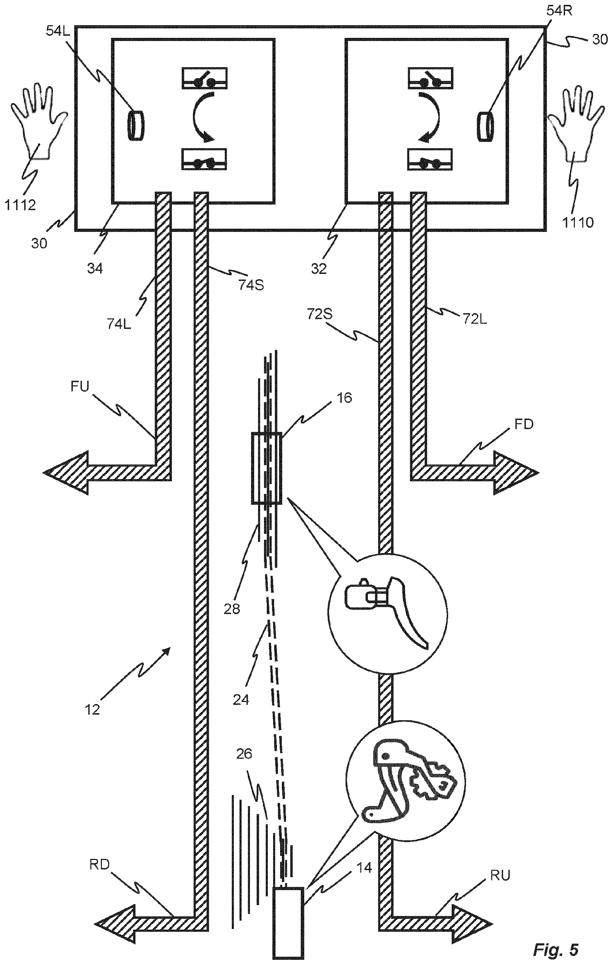

In **figure 5****,** an example is shown wherein the right manual control device 32 configured to be handled with the right hand 1110 of the cyclist C issues, as commands 72S, 72L, the upshift command RU of the rear derailleur 14 (towards a smaller sprocket 26) and the downshift command FD of the front derailleur 16 (towards a larger chainring 28) (or vice versa); the left manual control device 34 configured to be handled with the left hand 1112 of the cyclist C issues, as commands 74S, 74L, the downshift command RD of the rear derailleur 14 (towards a larger sprocket 26) and the upshift command FU of the front derailleur 16 (towards a smaller chainring 28) (or vice versa).

In this manner, considering the typical mounting of the bicycle transmission on the right side of the frame, with the largest sprocket 26 closest to the frame 1022 and the increasingly smaller sprockets 26 increasingly farther from the frame 1022, and with the smallest chainring 28 closest to the frame 1022 and the increasingly larger chainrings 28 (or the single second chainring 28) increasingly farther from the frame 1022, each hand 1110, 1112 commands the displacement of the chain 24 towards its own side, thus resulting a user interface 30 with a particularly intuitive operation and which rules are particularly easy to remember.

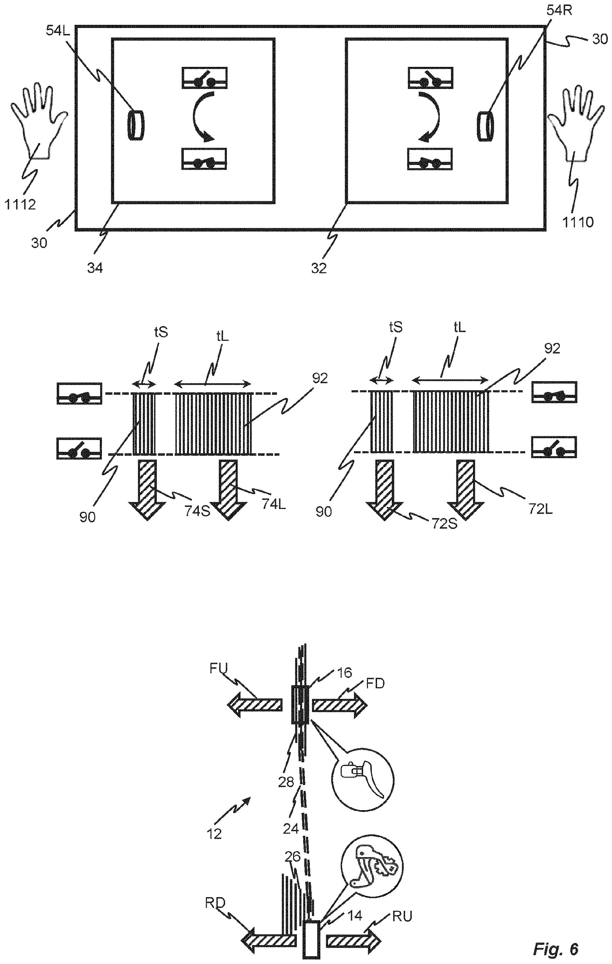

In **figure 6** there is shown in a totally schematic manner that the two actuation modes of each switch 54 are a comparatively short actuation 90 and a comparatively long actuation 92. In the present description and in the attached claims, under "comparatively short" and "comparatively long" it is meant that the duration is evaluated in a relative manner between two different actuation modes, so that in a mode the actuation is shorter than in the other mode. The duration may be evaluated also in comparison with a first and a second time thresholds T1, T2.

The example duration of the comparatively short actuation 90 is indicated as tS, and the example duration of the comparatively long actuation 92 is indicated as tL: as will be better understood hereinafter, the duration of such actuations is not necessarily constant, it may instead vary within some limits at each actuation of a switch 54 of the user interface 30. The case of switches 54 of the normally open type is shown, merely by way of non-limiting example in conformity to what has been said above.

For example, the comparatively short actuation 90 of the single switch 54 (54R, 54L) corresponds to a gearshifting signal of the rear derailleur 14, for example to the upshift signal RU of the rear derailleur 14 with the right manual control device 32 and the downshift signal RD of the rear derailleur 14 with the left manual control device 34; the comparatively long actuation 92 of the single switch 54 (54R, 54L) corresponds to a gearshifting signal of the front derailleur 16, for example to the downshift signal FD of the front derailleur 16 with the right manual control device 32 and the upshift signal FU of the front derailleur 16 with the right manual control device 34.

Usually the gearshifting FU, FD with the front derailleur 16, which corresponds to a greater change of the gear ratio with respect to the gearshifting RU, RD with the rear derailleur 14, is an operation which is performed by the cyclist 1100 in less critical conditions, so that a longer waiting time for its execution is not particularly critical.

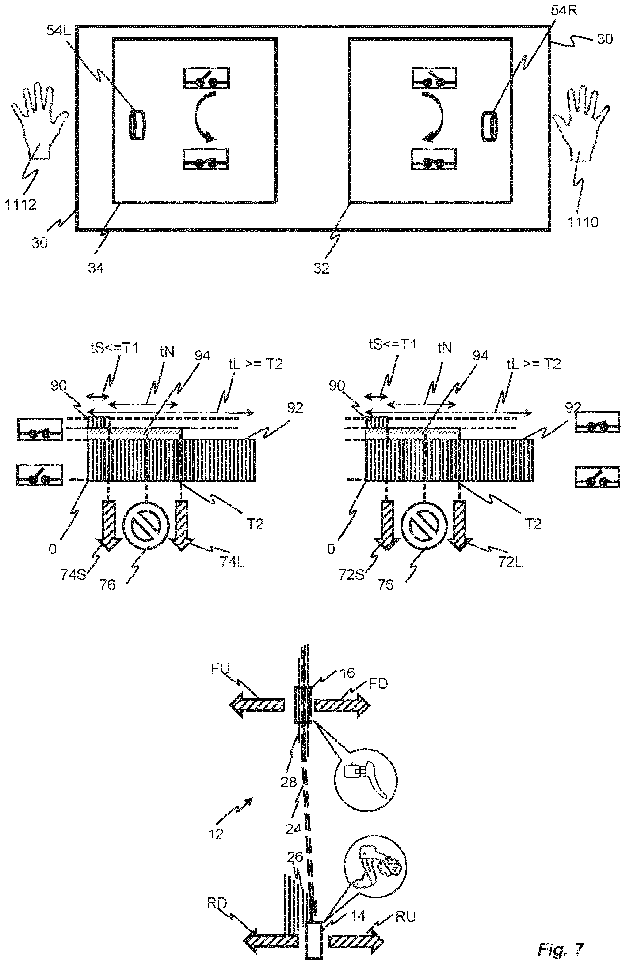

In **figure 7** there is shown in a totally schematic manner, again, merely by way of non-limiting example, with reference to the case of switches 54 of the normally open type, that the two actuation modes of each switch 54 may be a comparatively short actuation 90 and a comparatively long actuation 92, wherein the comparatively short actuation 90 is an actuation less than a first time threshold T1 and the comparatively long actuation is an actuation not less than (thus, equal to or higher than) a second time threshold T2, wherein the second time threshold T2 is higher than the first time threshold T1. The actuated state of the switch 54 is shown on different levels in order to show the effective durations of the actuations 90, 92.

Through this provision, an invalidity time interval tN of the duration of the actuation of the switch 54 by the cyclist is determined, which allows one to discriminate with greater certainty between the two types of commands desired by the cyclist 1100, without requiring a very high attention threshold by him/her. The provision turns out to be particularly useful for uncoordinated cyclists.

In particular, no command signal is generated (as schematized by the prohibition symbol 76) if the elapsed time until conclusion of the actuation of the switch 54 is less than the second time threshold T2 and higher than the first time threshold T1, namely if it is comprised between the first time threshold T1 and the second time threshold T2. An actuation having such a time duration is therefore regarded as an invalid actuation 94.

In figure 7 there is also shown, in a completely schematic manner, that the command corresponding to the comparatively short actuation 90 is issued at deactuation of the switch 54 (for example, upon release of the associated manual actuation member), namely at the falling edge of the high voltage pulse in the case of normally closed switch 54; on the other hand, the command corresponding to the comparatively long actuation 92 is issued after a time corresponding to the second time threshold T2, measured since the time (t=0) of actuation of the switch 54, therefore without waiting for release thereof - without waiting for the falling edge of the high voltage pulse in the case of normally closed switch 54.

This provision allows a prompt response of the gearshift 12 or other controlled electric device to be obtained; it is however also possible to wait, beyond the second time threshold T2, for the release of the switch 54 - for the falling edge of the high voltage pulse in the case of normally closed switch 54.

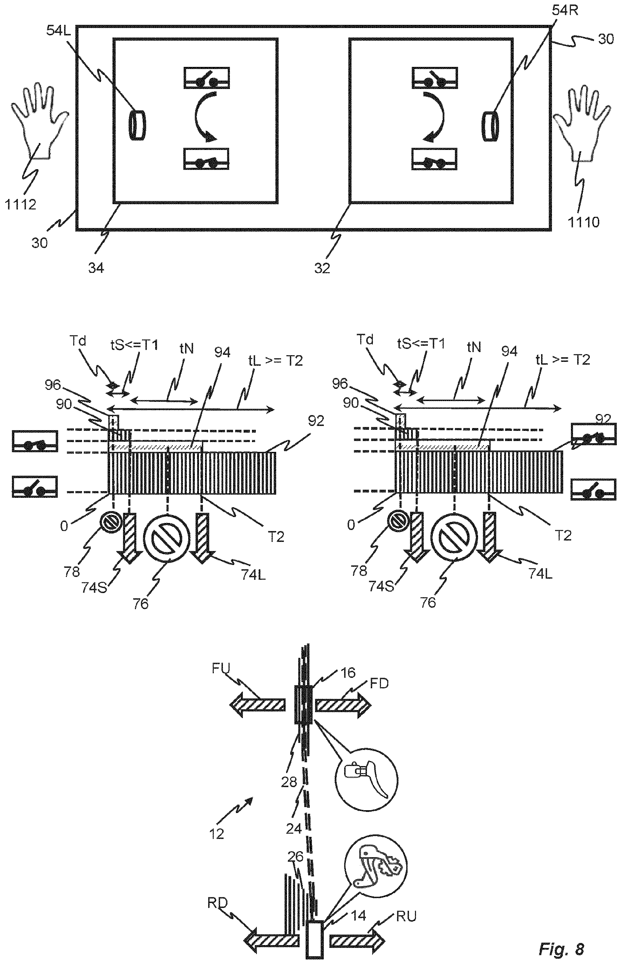

In **figure 8** there is shown in a totally schematic manner, again, merely by way of non-limiting example, with reference to the case of switches 54 of the normally open type, that the comparatively short actuation 90 may be considered valid, to the end of issuing a gearshifting command or other command signal of an electric device, only if it has a duration higher than a third time threshold Td, the third time threshold Td being less than the first time threshold T1.

In this manner a minimum threshold of actuation validation is provided for, allowing a too short actuation 96 to be ignored, typically representative of an unintentional actuation of the switch 54, caused for example by trembling of the hand 1110, 1112 of the cyclist 1100, by vibrations from ground, and similar events.

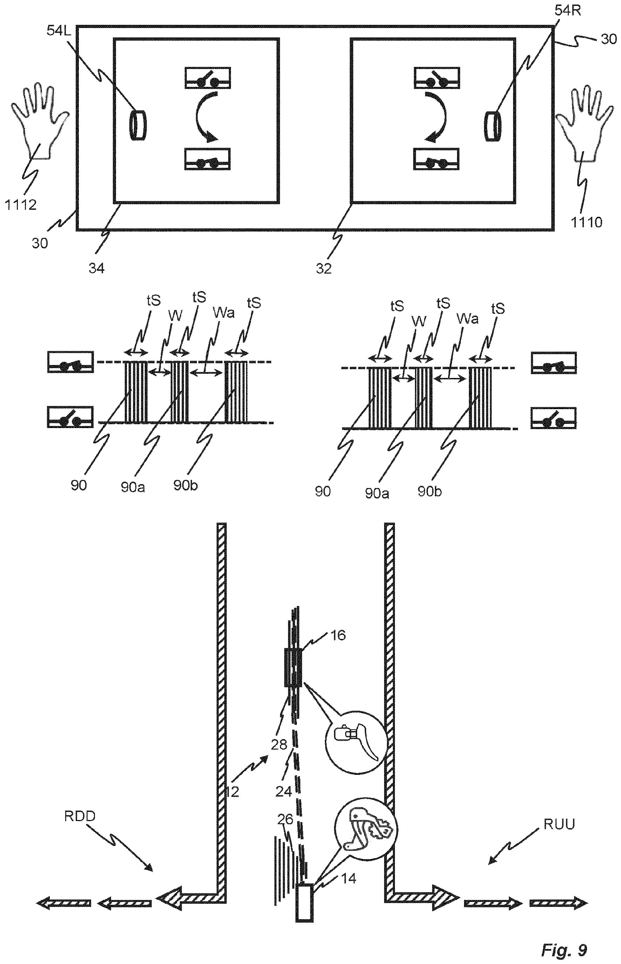

In **figure 9** there is shown in a totally schematic manner, again, merely by way of non-limiting example, with reference to the case of switches 54 of the normally open type, that a multiple short actuation 90, if a time interval W (Wa) between a successive short actuation 90a (90b) and the release of the immediately preceding short actuation 90 (90a) is less than a (fourth) threshold TM, may entail the issue of a multi-shift signal, wherein the chain 24 is displaced onto a toothed wheel 26, 28 not immediately adjacent to that whereat it is, without waiting for the chain 24 to be effectively engaged with the (or each) intervening toothed wheel. The durations tS of the comparatively short actuations 90, 90a, 90b are deliberately shown different, as are the two time intervals W, Wa.

In particular, this type of actuation may entail, as illustrated, a multiple upshift RUU of the rear derailleur 14 in the case of the right control device 32, and the issue of a multiple downshift signal RDD of the rear derailleur 14 in the case of the left control device 34, the number of shifts corresponding to the number of short actuations of the multiple actuation (three in the example shown).

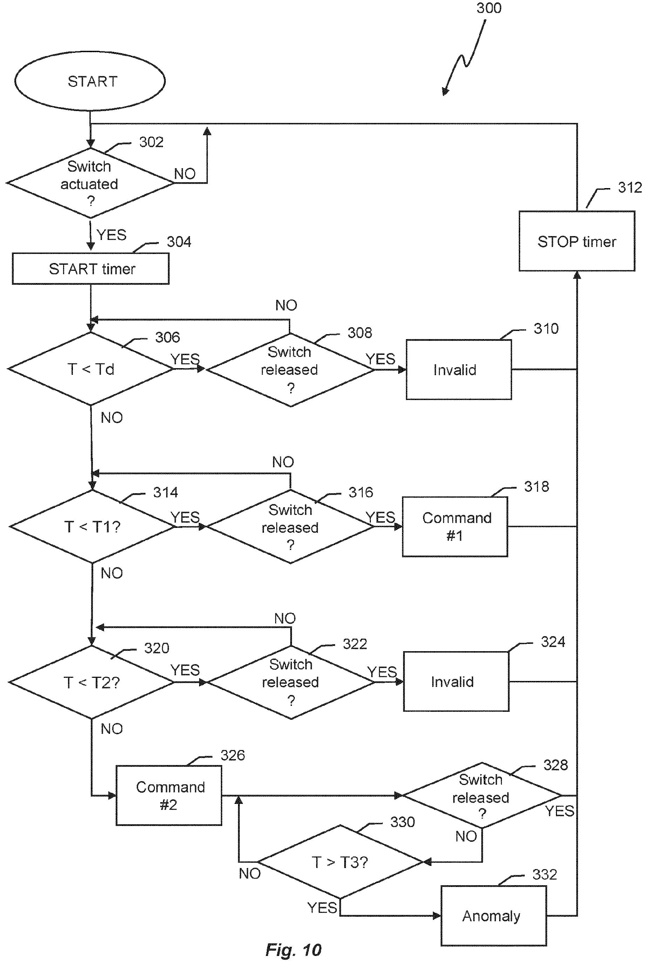

In **figure 10** there is shown an entirely non-limiting, example flowchart of a method 300 for electronically controlling a bicycle electronic system, for example a bicycle gearshift, according to what has been described above. For the sake of simplicity, only what concerns one of the switches 54 is shown, for example that of the manual control device 32, it being understood that the same applies also to each other switch 54, with the changes discussed further below. For the sake of simplicity, what concerns the multi-shift is omitted.

In a block 302 it is checked whether the switch 54 is actuated, for example if an associated lever, such as the lever 52 of figures 2a, 2b, is rotated (usually, by pushing it with the fingers) or if an associated push-button is depressed. This check consists in particular in checking the state of the switch 54, for example by monitoring the voltage of a circuit line wherein the switch 54 is inserted. Block 302 is cyclically repeated, for example at each clock signal of a microprocessor of the data processing system of the electronic system, which executes the control method 300, until one detects that the switch 54 is actuated. In the case of normally open switch 54, the positive outcome (yes) of the check of block 302 essentially corresponds to the rising edge of the voltage on the line wherein the switch 54 is inserted.

With the cyclic repetition of block 302, a monitoring of the actuation of the switch 54 is thus implemented.

At the positive outcome (yes) of the check of block 302, in a block 304 one starts to measure (from zero) an elapsed time since actuation of the switch 54: for example, a timer is started. The timer may be implemented in any suitable manner, through hardware, software, firmware; for example it may be implemented through a count of clock pulses.

Stated in general, release of the switch 54 is then monitored, as represented by blocks 308, 316, 322, 328 described hereinbelow, meanwhile comparing the elapsing time with the three different time thresholds: in increasing order the third time threshold Td, then the first time threshold T1, then the second time threshold T2, as represented by blocks 306, 314, 320 described hereinbelow.

First, while the elapsed time is less than the third time threshold Td (the smallest), as monitored in block 306 (output yes), any release of the switch 54, as monitored in block 308 (output yes), entails the status of invalidity of the actuation of the switch 54, in block 310. This corresponds with the too short actuation 96 of figure 8.

In case of release before the elapsed time has reached the third time threshold Td, one thus moves, after block 310, to execution of a block 312, wherein the measuring of the elapsed time is terminated, for example by zeroing the respective timer; issue of no gearshifting command or other command signal occurred. This corresponds to the too short actuation 96 of figure 8.

If the switch 54 is not released (output no of block 308), blocks 306 and 308 are continuatively repeated, until elapse of the third time threshold Td (output no of block 306).

When the elapsed time has reached or overcome the third time threshold Td (output no of block 306) and while it remains comprised between the third time threshold Td and the first time threshold T1, as monitored in block 314 (output yes), any release of the switch 54, as monitored in block 316 (output yes), entails, in a block 318, the issue of a command signal of a first type (Command #1), for example a gearshifting command of the first type, associated with the comparatively short actuation 90 of figures 6-8 described above. For example, it may be a gearshifting command of the rear derailleur 14: the upshift RU in the case of the right control device 32 and the downshift RD in the case of the left control device 34 according to the example of previously described figure 5.

One then moves to execution of block 312, wherein measuring of the elapsed time is terminated.

If the switch 54 is not released (output no of block 316), blocks 314 and 316 are continuatively repeated, until elapse of the first time threshold T1 (output no from block 314).

Starting from that moment, while the elapsed time is less than the second time threshold T2, as monitored in block 320 (output yes), any release of the switch 54, as monitored in block 322 (output yes), entails the status of invalidity of the actuation of the switch 54, in block 324. This corresponds to the invalid actuation 94 of previously described figures 7-8.

In case of release before the elapsed time reaches the second time threshold T2, one then moves, after block 324, to the execution of block 312, wherein the measuring of the elapsed time is terminated.

If the switch 54 is not released (output no of block 322), blocks 320 and 322 are continuatively repeated, until elapse of the second time threshold T2 (output no from block 320).

When the elapsed time has reached or overcome the second time threshold T2 (output yes from block 320), in a block 326 the issue of a command signal of a second type (Command #2) is executed, for example a gearshifting command of the second type, associated with the comparatively long actuation 92 of figures 6-8 described above. For example, it may be a gearshifting command of the front derailleur 16: the downshift FD in the case of the right control device 32 and the upshift FU in the case of the left control device 34.

In a successive block 328, one then waits for release of the switch 54. Block 328 is cyclically executed (output no, in the absence of the optional block 330 described below) until release of the switch 54.

Upon release of the switch 54, one moves to execution of block 312, wherein measuring of the elapsed time is terminated.

A further check may be implemented, in a block 330 optionally inserted at output no of block 328, that the elapsed time does not overcome a fourth time threshold T3, higher than the second time threshold T2, and, if the elapsed time reaches the fourth time threshold T3, executing an anomaly procedure in a block 332 and proceeding, for example, with block 312.

The anomaly procedure of block 332 may comprise for example: issuing an alarm signal of maximum actuation time of the switch and/or terminating the measuring of the elapsed time (for example, in the same block 312) and/or stopping monitoring the release of the switch.

In this manner, in case the cyclist exerts a too long actuation, the cyclist is alerted and possibly, for example, the duration of a power supply battery of the manual control device is preserved.

In decisional blocks 306, 314, 320, 330 only an inequality is indicated, so that when the elapsed time is exactly equal to the respective time threshold Td, T1, T2, T3, the outcome is negative; it shall however be understood that it is possible to also evaluate the equality, so that when the elapsed time is exactly equal to the respective time threshold Td, T1, T2, T3, the outcome is positive.

In the case of two switches 54, the flowchart of figure 10 is duplicated, with the warning that in blocks 318, 326, command signals of a third type (identified herein as Command #1a) and of a fourth type (identified herein as Command #2a) are issued, respectively.

Block 304 represents, in a method for controlling a bicycle electronic system disclosed herein, starting to measure an elapsed time since detection of the actuation of the switch 54.

Block 316, considering the duplication of the flowchart of figure 10 in the case of two switches 54, represents, in a method for controlling a bicycle electronic system disclosed herein:
if the elapsed time until conclusion of the actuation of the switch 54 is less than (or equal to) the first time threshold T1, generating a first command signal (Command #1) if the actuated switch 54 is a first switch (for example switch 54R), or generating a second command signal (Command #1a) if the actuated switch is a second switch (for example switch 54L), and
if the elapsed time is not less than the second time threshold T2, generating a third command signal (Command #2) if the actuated switch is the first switch (for example switch 54R), or generating a fourth command signal (Command #2a) if the actuated switch is the second switch (for example switch 54L).

With reference for example to figures 4 and 5, the first command signal (Command #1) and the second command signal (Command #1a) are generated in order to control a first electric device, for example the rear derailleur 14, and the third command signal (Command #2) and the fourth command signal (Command #2a) are generated in order to control a second electric device, for example the front derailleur 16.

Block 310 represents, in the method for controlling a bicycle electronic system disclosed herein, that no command signal is generated if the elapsed time until conclusion of the actuation of the actuated switch is less than a third predetermined time threshold Td, the third threshold Td being less than the first time threshold T1.

Block 324 represents, in the method for controlling a bicycle electronic system disclosed herein, that no command signal is generated if the elapsed time until conclusion of the actuation of the actuated switch is less than the second time threshold T1 and higher than the first time threshold T1.

Blocks 306, 308, 310 may be omitted in case it is not desired to implement the control on the minimum duration Td of the actuation of the switch.

The switches may be normally closed, the operation being dual with respect to that described above.

If a single derailleur is provided for -for example the rear derailleur-, a single switch is provided for, in a single control device; the changes to be made are made, through the previous disclosure, within the skills of the skilled in the art.

The issue of a gearshifting command may be inhibited, or in any case the gearshifting command may not be actuated, if the transmission chain is already at the last toothed wheel in the direction in which the gearshifting command should be actuated.

The various embodiments, variants and/or possibilities of each component or group of components that have been described are to be meant as combinable with each other in any manner, unless they are mutually incompatible.

The above is a description of various embodiments, variants and/or possibilities of inventive aspects, and further changes can be made without departing from the scope of the present invention. The shape and/or size and/or location and/or orientation of the various components and/or the succession of the various steps can be changed. The functions of an element or module can be carried out by two or more components or modules, and vice-versa. Components shown directly connected to or contacting each other can have intermediate structures arranged in between them. Steps shown directly following each other can have intermediate steps carried out between them. The details shown in a figure and/or described with reference to a figure or to an embodiment can apply in other figures or embodiments. Not all of the details shown in a figure or described in a same context must necessarily be present in a same embodiment. Features or aspects that turn out to be innovative with respect to the prior art, alone or in combination with other features, should be deemed to be described per se, irrespective of what is explicitly described as innovative.

## Claims

1. Method for generating a plurality of different command signals (72S, 72L, 74S, 74L, Command #1, Command #2, Command #1a, Command #2a) for each of a plurality of electric devices (14, 16, 22) of a bicycle electronic system, each operable in a plurality of operating actions (RU, RD, FU, FD), the method comprising:
i) receiving (202) a user input electric signal, obtained from actuation of a single switch (54, 54R, 54L) of a user interface (30) comprising a plurality of switches (54, 54R, 54L), and
ii) generating (204) a command signal (72S, 72L, 74S, 74L, Command #1, Command #2, Command #1a, Command #2a) for a single electric device (14, 16) based both on a comparison among an operating time and, at least, a first predetermined time threshold (T1) and a second predetermined time threshold (T2), and on the actuated switch (54, 54R, 54L), wherein the operating time is associated with the duration (tS, tL) of actuation of the switch (54, 54R, 54L).

2. Method according to claim 1 further comprising starting (304) to measure an elapsed time since the detection of the actuation of the switch (54, 54R, 54L).

3. Method according to claim 1 or 2 wherein
- the plurality of electric devices (14, 16, 22) comprises a first electric device and a second electric device, each actuatable in at least two operating actions, and wherein
- the plurality of switches (54, 54R, 54L) comprises a first switch and a second switch, wherein
if the elapsed time until conclusion of the actuation of the switch (54, 54R, 54L) is less than or equal to the first time threshold (T1), generating (318) a first command signal (Command #1) if the actuated switch is the first switch, or generating a second command signal (Command #1a) if the actuated switch is the second switch, and
if the elapsed time is not less than the second time threshold (T2), generating (326) a third command signal (Command #2) if the actuated switch is the first switch, or generating a fourth command signal (Command #2a) if the actuated switch is the second switch,
wherein the second time threshold (T2) is higher than the first time threshold (T1).

4. Method according to claim 3 wherein the first command signal (Command #1) and the second command signal (Command #1a) are generated to control the first electric device, and wherein the third command signal (Command #2) and the fourth command signal (Command #2a) are generated to control the second electric device.

5. Method according to any of claims 2 to 4, wherein no command signal is generated (310) if the elapsed time until conclusion of the actuation of the actuated switch (54, 54R, 54L) is less than a third predetermined time threshold (Td), the third threshold (Td) being less than the first time threshold (T1).

6. Method according to any of claims 2 to 5 wherein no command signal is generated (324) if the elapsed time until conclusion of the actuation of the actuated switch (54, 54R, 54L) is less than the second time threshold (T2) and higher than the first time threshold (T1).

7. Method according to any of claims 3 to 6, comprising configuring the first switch to be actuated by the user's right hand, and configuring the second switch to be actuated by the user's left hand.

8. Method according to any of the previous claims, wherein the plurality of electric devices (14, 16, 22) comprises at least two among a front derailleur (16), a rear derailleur (14), a transmission internal to the hub of the rear wheel, a saddle setting adjuster, an illumination device, a cycle computer (22).

9. User interface (30) comprising a plurality of switches (54, 54R, 54L) and configured to issue a plurality of different command signals (72S, 72L, 74S, 74L, Command #1, Command #2, Command #1a, Command #2a) to each of a plurality of different electric devices (14, 16, 22) of a bicycle electronic system, each operable in a plurality of operating actions (RU, RD, FU, FD), wherein said issuing comprises generating (204) a command signal (72S, 72L, 74S, 74L, Command #1, Command #2, Command #1a, Command #2a) for a single electric device (14, 16, 22) based both on a comparison among an operating time, associated with the duration of actuation of a single switch (54, 54R, 54L), and, at least, a first predetermined time threshold (T1) and a second predetermined time threshold (T2), and on the actuated switch (54, 54R, 54L).

10. User interface (30) according to claim 9 configured to measure (302) an elapsed time since the detection of the actuation of the switch.

11. User interface according to claim 9 or 10, wherein the plurality of switches (54, 54R, 54L) comprises a first switch and a second switch, and wherein the user interface (30) is configured to issue a plurality of different command signals (72S, 72L, 74S, 74L, Command #1, Command #2, Command #1a, Command #2a) to, at least, a first electric device and a second electric device of the plurality of electric devices (14, 16, 22), the user interface (30) being configured to execute a method according to any of claims 3 to 8.

12. User interface (30) according to any of claims 9-11, comprising a plurality of manual control devices (32, 34, 36), each including only one of the plurality of switches (54, 54R, 54L).

13. Bicycle electronic system comprising the user interface (30) according to any of claims 9-12 and a plurality of different electric devices (14, 16, 22), each configured to receive a plurality of different command signals (72S, 72L, 74S, 74L, Command #1, Command #2, Command #1a, Command #2a) from the user interface (30).
